# EUROPEAN PATENT SPECIFICATION

(11) **EP 0 559 681 B1**
(45) Date of publication and mention of the grant of the patent: **25.09.1996**
(21) Application number: 91920187.1
(22) Date of filing: 25.11.1991
(51) Int. Cl.: A01G 1/04

(54) **IMPROVEMENTS RELATING TO THE CULTIVATION OF MUSHROOMS**
VERBESSERUNGEN IN BEZUG AUF DIE ZUCHT VON PILZEN
AMELIORATIONS RELATIVES A LA CULTURE DES CHAMPIGNONS

(30) Priority: 27.11.1990 GB 9025718; 20.02.1991 GB 9103559
(43) Date of publication of application: 15.09.1993
(73) Proprietor: BARTON, Michael, Nr. Henfield, West Sussex BN5 9BJ (GB)
(72) Inventor: BARTON, Michael, Nr. Henfield, West Sussex BN5 9BJ (GB)
(74) Representative: Sanders, Peter Colin Christopher
(86) International application number: GB9102076
(87) International publication number: WO9209192

(56) References cited:
- FR-A- 2 358 096
- US-A- 4 001 966
- PATENT ABSTRACTS OF JAPAN vol. 014, no. 439 (C-076)19 September 1990 & JP,A,2 171 118 ( MIYAKE TERUYOSHI ) 22 December 1988 see abstract
- PATENT ABSTRACTS OF JAPAN vol. 014, no. 020 (C-676)17 January 1989 & JP,A,1 262 732 ( ISAO KANEHARA ) 14 April 1988 see abstract

## Description

This invention relates to the cultivation of edible fungus, such as Agaricus bisporus (mushrooms), under controlled conditions.

A problem which is common to all current mushroom cultivation processes is that of temperature control in the substrate. In particular, during the spawn running phase of the process and after the mushroom spawn have been growing in the compost for about 8 to 10 days, there is a thermophilic reaction within the compost that produced a surge of heat. Without temperature control, the resulting temperature within the compost can easily rise above the thermal death point of the mushroom spawn. The problem is particularly acute during the hot summer months.

Accordingly, most modern cultivation methods at present require sophisticated air conditioning equipment to control the air temperature, relative humidity and carbon dioxide content. In particular, in a multi-tier system where the compost/spawn mixture is retained in stacked pallets or on shelves, it is essential to maintain a flow of air between the superimposed layers.

A single tier system in which the compost/spawn mixture is contained in plastic bags, sacks or trays at floor level does not require this forced air flow and produces good quality mushrooms without the need for expensive air conditioning equipment. However, the output per unit area of built floor space is not as high. Moreover, as the capacity of a bag increases, so does the risk of overheating at the centre of the bag.

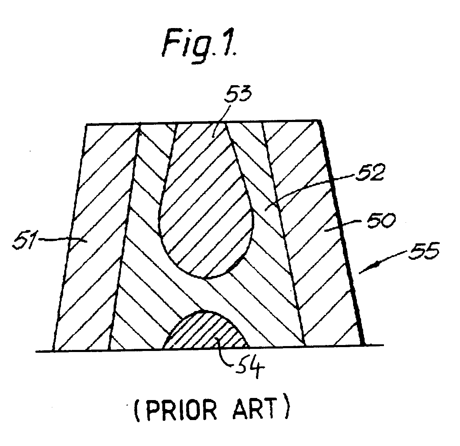

A somewhat similar problem exists in the composting phase of the mushroom cultivation process. This is generally divided into two principal phases. During the first phase temperatures within the compost heap are generally in the range of 65-80°^{C}, while in the second phase the temperatures are generally within the range of 45-55°C. The first phase is a softening process in which water is added to the raw material, such as horse manure and straw, and the material is repeatedly turned, mixed and aerated over a period of days. After some days, the partially decomposed compost has sufficient cohesion that it can be formed into a compost heap which will have a temperature profile somewhat as shown in Fig. 1 of the accompanying drawings. This temperature profile is generally unsatisfactory since only a relatively small proportion 52 of the heap 55 is under the optimum conditions for decomposition. The outer layers 50, 51 of the heap are well aerated but too cool, the central zone 53 is warmer but is poorly aerated, and there is also a foul-smelling anaerobic core 54.

The second phase of the composting process is a pasteurising and conditioning process which is carried out under cover in a controlled environment either in the final beds or trays in which the mushrooms are cultivated, or in bulk tunnel systems. During this phase, the temperature is closely controlled and any remaining ammonia released during the first phase is converted by the thermophilic microflora into protein as food for the mushrooms.

Although the composting process does not have the problem of heat surges, it does have the problem of preventing environmental pollution due to the foul-smelling anaerobic core. Moreover, the temperature difference between the core of the compost and the outside layers is generally undesirable and requires considerable mixing and/or turning of the compost, thereby prolonging the composting process.

Attempts have been made to force air upwardly through the core of the compost to achieve more uniform temperature distribution, but these have not been successful.

US-A-4,001,966 recognises the importance of temperature control and the problem of heat surges in a compost stack in the production of mushrooms, and proposes a solution in which the compost stack is sub-divided into spaced apart wafers held in film-lined container sections.

JP-A-1,262,732 (Patent Abstracts of Japan, Volume 14, No. 20) discloses a process for cultivating fruit bodies, such as mushrooms, in which a fungus bed is covered with an air permeable bag and provided with a ventilation hole to assist the growth of the fruit bodies.

JP-A-2,171,118 (Patent Abstracts of Japan, Volume 14, No. 439) discloses a similar cultivation process in which a sterilised culture medium in a container is inoculated with mushroom spawn, and corresponds to the preambles of claims 1 and 10. Sterile air is supplied to the medium through an overhead duct, the air flowing downwardly through a central vertical passage into a transverse passage at the base of the container, and then passing upwardly through the medium, the medium including ventilation holes which allow the sterile air to permeate the medium and increase the available surface area for growth of the fruit bodies.

According to the present invention, such an arrangement in which at least one open-ended tubular ventilation passage is formed through a compost stack and in which the stack is supported above ground level with the open-ended ventilation passage communicating with the space beneath the stack, is characterised in that the space beneath the stack is open to the atmosphere such that, as the temperature within the stack rises, cooling air from the atmosphere is drawn by convection into the tubular ventilation passage from beneath the stack and flows upwardly through the passage to control the rise in temperature within the stack. The stack is preferably supported on a base member having an aperture aligned with the tubular ventilation passage.

By opening the space beneath the stack to the atmosphere, the upward flow of cooling air through the ventilation passage provides improved aeration and a more uniform temperature distribution through the core of the compost stack. Moreover, the risk of the substrate overheating during the spawn running phase of the process is reduced. Accordingly, a greater depth of compost can be used, and this provides an increased yield of mushrooms per unit area of floor space.

In addition, for those species of mushroom requiring a layer of casing on top of the substrate, less casing is required compared to a system in which the same amount of compost is arranged in two or more tiers. Where a top layer of casing is added to the compost mixture, the ventilation passage may continue upwards through the top layer of casing. Alternatively, to retain the maximum surface area of the casing for growing mushrooms, the top end of the ventilation passage may communicate with the atmosphere through a lateral channel formed in or just beneath the layer of casing.

In practice, an array of bins or bags each containing a substrate with a single ventilation passage could be provided. However, in a preferred embodiment, a compacted block of the compost or compost/spawn mixture is formed with an array of ventilation passages arranged for example, in rows and columns. For example, a block measuring 1.0M × 1.5M × 0.5M (length × breadth × height) might have rows and columns of ventilation passages spaced apart by about 20cm.

Such a block is preferably formed by positioning an array of tubular formers within a temporary enclosure, lowering an apertured tray over the formers, filling the enclosure with the compost or compost/spawn mixture, compacting the fill, and thereafter removing the enclosure and relatively, moving the tray and the formers to withdraw the formers from the compacted block.

The invention will be further described, by way of example only, with reference to the accompanying drawings in which:
Fig. 1 is a diagrammatic temperature profile of a prior art compost heap,
Fig. 2 is a diagrammatic perspective of a compost stack embodying the invention for cultivating the Agaricus mushroom in individual bins,
Fig. 3 is a diagrammatic side view of an alternative compost stack embodying the invention for cultivating the Agaricus mushroom,
Fig. 4 is a diagrammatic top view of the stack shown in Fig. 2 but with the top layer of casing removed for clarity,
Fig. 5 illustrates diagrammatically a process for producing the compost stack of Figs. 3 and 4.
Fig. 6 illustrates diagrammatically a further step in the process of Fig. 5,
Fig. 7 is a scrap section showing one alternative method of venting the top of the stack of Figs. 3 and 4, and
Fig. 8 is a scrap section similar to Fig. 7 showing a further alternative method of venting.

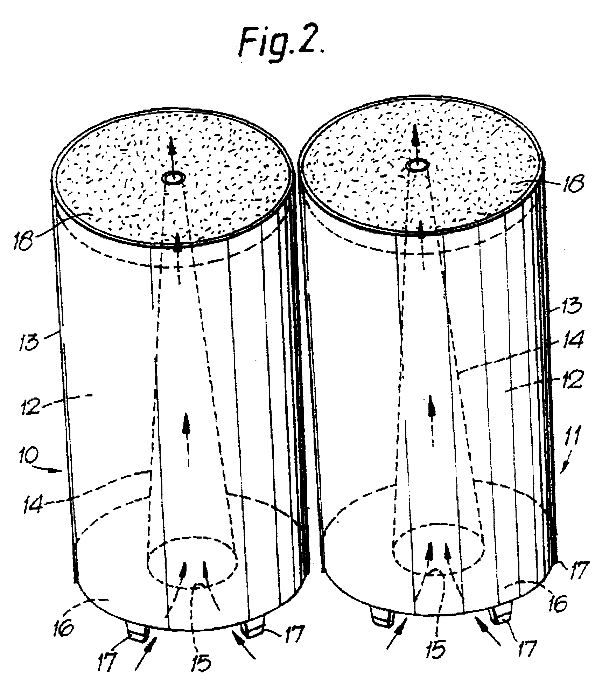

Referring first to Fig. 2, two generally cylindrical bins 10, 11 are positioned side-by-side with additional bins (not shown) being provided as required to form an array consisting of rows and columns of bins.

The bins are made of any suitable rigid or semi-rigid material, preferably a metal such as steel, but might also consist of plastics materials which are sufficiently thin or which have been perforated or otherwise vented to allow the passage of heat. Each bin is filled with a mixture 12 of pasteurised compost and mushroom spawn. The compost is generally a mixture of animal excreta, such as horse manure or chicken droppings, and fibrous matter such as straw, particularly wheat straw. The spawn is generally cereal grain which has been sterilized and impregnated with selected inoculants made from spores, tissue or mycelium under aseptic laboratory conditions.

A top layer of soil or peat casing 18, such as peat and chalk, is then added. The rigid or semi-rigid cylindrical wall 13 of the bin not only provides a greater volume but allows compression of the compost such that the weight of compost in each bin is higher than can be achieved with flexible bags or sacks. The increased weight produces a corresponding greater yield of mushrooms. For a single tier system, rigid or semi-rigid bins therefore retain more compost per unit area of floor space, without increasing the amount of casing 18 required.

A funnel-shaped metal or plastic duct 14 is positioned over a central opening 15 in the base 16 of the bin before filling the bin with the compost/spawn mixture. The duct 14 is either fixed or removable, and provides a ventilation passage through the core of the compost. The base 16 is supported above the ground, optionally on legs 17, such that air can pass upwardly through the opening 15 into the duct. After forming the ventilation passage, the duct 14 can be left in place or removed.

The spawn colonise the compost and after a number of days there is a thermophilic reaction which generates excess heat. The function of the ventilation passage formed by the duct 14 is to convey some of this excess heat away from the central region of the bin, thereby preventing overheating of the mushroom spawn. As the temperature rises, cooler air is drawn by convection through the opening 15, and this air rises through the ventilation passage and emerges at the other end at or above the top level of the casing 18. The duct 14 therefore acts as a chimney.

Optionally, the top of each ventilation passage formed by the duct 14 is closed with a removable closure member (not shown), the member being inserted or closed when the bin is filled, and only being removed or opened when cooling is required. The member can therefore be used to control the compost temperature, not only to prevent overheating, but also to retain the heat during certain periods of the crop, particularly during the cold winter months. Opening and closing could advantageously be controlled thermostatically using, for example, a bimetallic strip.

A deflector (not shown) might also be located at the top of the ventilation passage such that the warm air emerging from the passage is deflected over the bed of casing 18 to assist the growing process.

The system also lends itself to capillary watering. In this case, a trough of water (not shown) extends between adjacent rows or columns of bins and a capillary wick for each bin has one end immersed in the water in the trough and its other end feeding the casing material 18.

With the above arrangement, assuming a 600mm diameter bin, no compost will be more than 150mm from a ventilated surface. Accordingly, the thermophilic generation of heat is less of a problem, and the risk of the compost temperature reaching the thermal death point of the spawn is substantially reduced.

The slight taper of the bins allows them to be nested within one another for stacking and transportation when empty. The ducts 14, if retained, can also be nested within one another.

The legs 17, if fitted, can be positioned to interlock for double or treble stacking.

Each bin can be fitted with a removable lid or cover (not shown) with a hole aligned with the ventilation passage formed by duct 14. The lid or cover can be used to enhance the control of carbon dioxide at the relevant stages of the crop. Both the bin and the lid or cover can be cleaned and re-used.

In general, the system maximises the output per square metre of floorspace for a single tier system, but can also be used in a multi-tier system. The system is ideally suited for a satellite production system where the bins are filled at a large central station and despatched to a number of smaller satellite stations where the mushrooms are grown. The use of bins has the further advantage of providing a comfortable picking height.

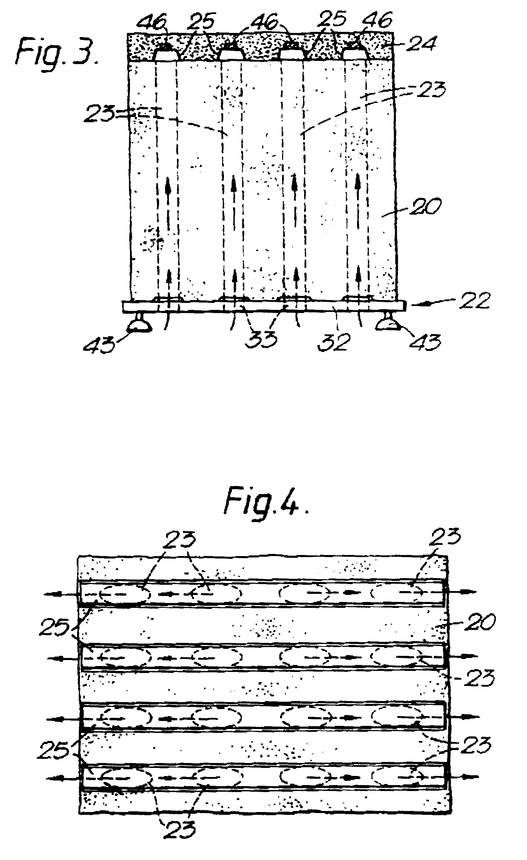

In the alternative compost stack illustrated in Figs. 3 and 4, an array of ventilation passages 23 are formed in a compacted generally rectangular block 20 of the compost/spawn mixture, the block being supported clear of the ground on a stillage 22. This ventilation arrangement can also be used during the composting phase of the mushroom growing process before the compost is planted with mushroom spawn.

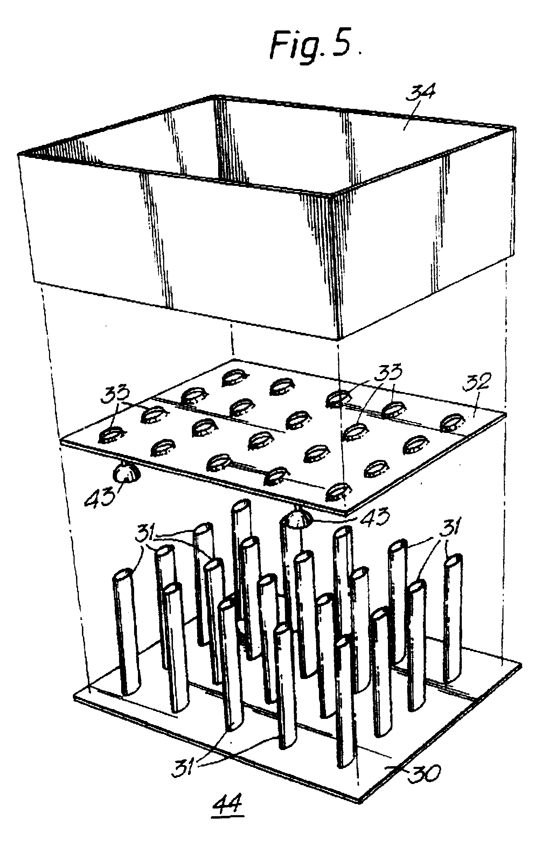

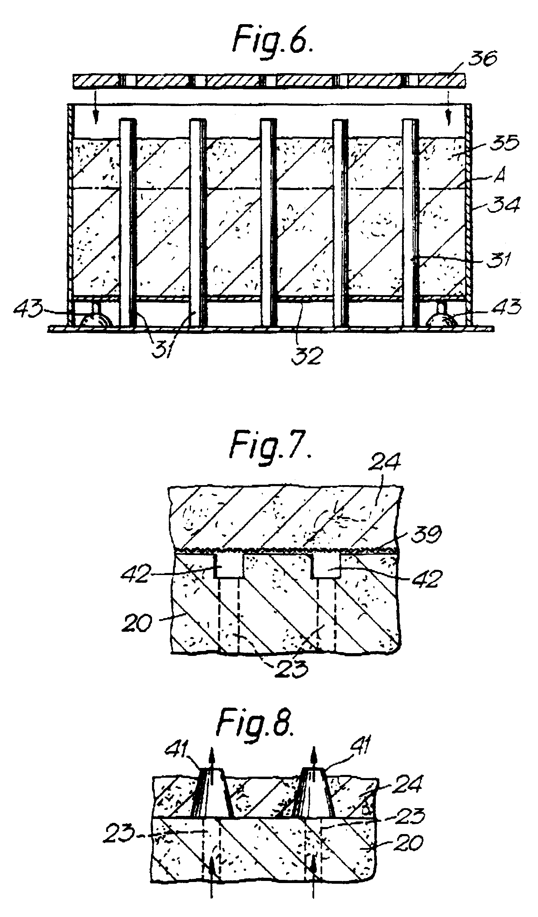

A typical sequence of operations for producing the compacted, ventilated, rectangular block 20 is illustrated in Figs. 5 and 6.

A formwork 30 having an array of tubular formers 31 arranged in rows and columns is located at the filling point and secured to the floor 44. The stillage 22 consisting of a flat apertured tray 32 is positioned over the formwork 30 and lowered toward the floor with the tubular formers 31 being slidably received in the respective apertures 33. The tray rests on feet 43.

An external rectangular form 34 is then positioned around the outside of the tray 32 to act as temporary shuttering, and the resulting assembly is loose filled with either compost or a spawn/compost mixture 35 to the required volume/weight.

A compression plate 36 with the same profile as the apertured tray 32 is then placed on top of the loose filling 35 and pressed downwards to the required level shown by the dashed line 'A' (Fig. 6). The fibrous nature of the compost 35 provides sufficient cohesion that the pressure exerted by the plate 36 binds the compacted compost into a cohesive block.

The compression plate 36 and the external form 34 are then removed, and the apertured tray 32 carrying the compacted block 20 is lifted clear of the tubular formers 31, for example using a fork lift truck. The compacted block 20 is thus formed with an array of ventilation passages 23 extending from top to bottom of the block.

Advantageously, the apertures 33 protrude above the surface of the tray 32 and have a flared configuration. This not only smooths the flow of air into the ventilation passages 23, but also resists slippage of the block 20 during transit.

When using the described ventilation arrangement in the spawn running phase of the mushroom cultivation process, the ventilated block 20 of compost/spawn mixture may then be wrapped in plastic film wrapping or netting to eliminate minor spillages during subsequent transport of the block. Advantageously, the flexible wrapping extends above the top surface of the block to provide flexible retaining walls for a subsequent layer of soil or peat casing.

When using the described ventilation arrangement in the composting phase of the mushroom cultivation process, the ventilated block 20 initially consists of unpasteurised, partially decomposed compost. This is left for several days in a controlled environment to complete the pasteurising and conditioning of the compost before planting the mushroom spawn. The original block 20 is preferably broken up before adding the spawn. The process of Figs. 5 and 6 can then be repeated to produce a new compacted, ventilated block 20 of compost/spawn mixture for the spawn running phase of the process. Alternatively, the compost/spawn mixture can be used in the embodiment of Fig. 2.

At the mushroom cultivation site, netting 39 may be secured over the top surface of the block before adding a layer of casing 24. The netting 39 prevents the casing falling down the vent holes 23, and can also be used to reclaim the casing at the end of the crop.

At the same time the top ends of the vent holes 23 are vented to the atmosphere either directly through the layer of casing 24 or in a transverse direction beneath the surface of the layer of casing. In the former arrangement, each vent hole 23 is provided with an individual chimney pot 41 (Fig. 8).

In the preferred alternative arrangement, either plastic channels 25 (Figs. 3 and 4) are laid across the top of each column or row of vent holes before applying the layer of casing 24, or the top surface of the ventilated compost block 20 is provided with channels 42 transversing the respective rows or columns of vent holes 23 (Fig. 7). The channels 42 could be formed, for example, during compression of the block 20 by forming the underside of the pressure plate 36 with ribs having the profile of the channels 42. Advantageously, in the former case, a capillary wick 46 (Fig. 3) extends along the top of each channel 25 to provide a continuous water supply for the casing material 24 without wetting the compost/spawn mixture 35, each capillary wick having one end immersed in a reservoir of water.

After the mushroom spawn has been growing in the compost for about 8 to 10 days, the temperature in the core of the substrate rises due to a thermophilic reaction. However, this surge in temperature is controlled by cooler air being drawn by convection into the ventilation passages 23 as shown by the arrows in Fig. 3. Accordingly, the risk of the temperature in the core of the substrate exceeding the thermal death point of the spawn is reduced.

The chimney pot 41, channel 25 or channel 42, may incorporate a valve or similar blocking device (not shown) for selectively controlling the flow of air along the ventilation passage. This can provide additional control of the temperature within the block 20.

When using the described ventilation arrangement during the spawn running phase of the mushroom cultivation process, the presence of the ventilating passages 23 prevents overheating in the core of the block 20 so that a significantly greater depth of compost/spawn mixture can be used compared to a system without ventilation. This increases the yield of mushrooms per unit area of floor space and reduces the amount of casing 24 required per ton of compost. It therefore leads to increased production and substantial savings in the crop producers' costs. The total number of passages 23, the precise cross-section of each passage, and the spacing between the passages is selected to ensure adequate ventilation with minimum loss of compost/spawn mixture. In general, I have found that the distance between the ventilated surfaces should not exceed about 20cms.

When using the described ventilation arrangement during the composting phase of the mushroom cultivation process, the presence of the ventilating passages 23 provides better aeration and a more uniform distribution of temperature throughout the block compared to that shown in Fig. 1. A much higher proportion of the compost is therefore at the optimum condition for decomposition. This can significantly reduce the time and amount of machinery required for composting, in particular by eliminating the mechanical handling of separate trays in a multi-tier shelf system. It can also overcome the environmental problems associated with foul-smelling anaerobic cores.

The compost that is used in the above process will already have undergone the first stage of the composting process in which the mixture of dung, such as horse manure, and fibrous matter, such as wheat straw, is partially decomposed by wetting a stack and then turning and aerating the stack at regular intervals over a period of days. A survey of present composting techniques will be found in the article by J.W. Sinden in The Mushroom Journal Aug. 1989 No. 200 pp 242-46.

In the present specification, the term 'casing' is used in the description and claims in its normally accepted sense to refer to a growth support medium formulated to help initiate and support the growth of the fruit bodies.

## Claims

1. A process for cultivating mushrooms wherein a mixture (12, 35) of organic and fibrous matter is composted and planted with mushroom spawn, and wherein an open-ended tubular ventilation passage (14, 23) is formed through a stack (10, 11, 20) of the compost, the stack (10, 11, 20) being supported above ground level with the open-ended tubular ventilation passage (14, 23) communicating with a space beneath the stack characterised in that, as the temperature within the stack (10, 11, 20) rises, cooling air from the atmosphere is drawn by convection into the said tubular ventilation passage (14, 23) from beneath the stack and flows upwardly through the passage to control the rise in temperature within the stack.

2. A process according to claim 1 wherein a plurality of the ventilation passages (23) are formed by compacting the compost (35) about an array of tubular formers (31) and then withdrawing the formers.

3. A process according to claim 1 or claim 2 wherein a top layer of casing (18, 24) is added to the stack (10, 11, 20), and the tubular ventilation passage (14, 23) is extended through the said layer.

4. A process according to claim 1 or claim 2 wherein a top layer of casing (18, 24) is added to the stack (10, 11, 20), and air from the top end of the ventilation passage (14, 23) flows out to the atmosphere through a lateral channel (25, 42) formed in or just beneath the layer of casing.

5. A process according to any one of the preceding claims in which the tubular ventilation passage (14, 23) is formed during preparation of the compost and before planting the mushroom spawn.

6. A process according to any one of the claims 1-4 in which the tubular ventilation passage (14, 23) is formed during or after the planting of the mushroom spawn.

7. A process according to claim 2 in which the ventilated stack (20) is formed by inserting the tubular forms (31) through respective apertures (33) in a base support member (32) for supporting the stack above ground level, enclosing the formers in a temporary enclosure (34), filling the enclosure (34) with compost or with a mixture of compost and spawn, compacting the fill, and thereafter removing the enclosure (34) and withdrawing the formers (31) from the compacted fill.

8. A process according to claim 3 or claim 4 further comprising wrapping the side walls of the stack in a flexible wrapping, the wrapping extending above the top surface of the stack to provide flexible side walls for retaining the layer of casing (18, 24).

9. A process according to any one of the preceding claims wherein the temperature within the compost mixture is further controlled by selectively blocking the flow of air through the ventilation passage (14, 23).

10. A compost stack for cultivating mushrooms, the stack (10, 11, 20) comprising a composted mixture of organic and fibrous matter planted with mushroom spawn, and including an open-ended tubular ventilation passage (14, 23), the stack (10, 11, 20) being supported on a base member (32) above ground level, and the tubular ventilation passage (14, 23) being aligned with an aperture (33) in the base member (32), characterised in that the space beneath the base member (32) is open to the atmosphere whereby, as the temperature within the compost rises, cooling air from the atmosphere is drawn by convection into the said passage from beneath the stack and flows upwardly through the passage to control the rise in temperature within the compost.

11. A compost stack according to claim 10 wherein a top layer of casing (18, 24) is added to the composted mixture, and wherein the ventilation passage (14, 23) extends upwardly through the layer of casing.

12. A compost stack according to claim 10 wherein a top layer of casing (18, 24) is added to the composted mixture, and wherein the top end of the ventilation passage (23) communicates with the atmosphere through a lateral channel (25, 42) formed in or just beneath the layer of casing.

13. A compost stack according to claim 10 further comprising an array of the said ventilation passages (20), each passage being aligned with a respective aperture (33) in the base member (32).

14. A compost stack according to claim 13 in which the base support member (32) is generally flat and each aperture (33) protrudes above the surface of the support member.

15. A compost stack according to claim 14 in which the size of the aperture (33) progressively decreases in an upward direction.

16. A compost stack according to claim 12 in which the lateral channel is formed by a length of material (25) impervious to water, and in which a corresponding length of water absorbent material (46) extends above the said channel for watering the layer of casing by capillary action.

17. A compost stack according to claim 10 in which the base member (32) comprises the base of a container (10, 11) containing the compost mixture.

18. A compost stack according to claim 17 in which the ventilation passage (14) is formed by a hollow tubular duct.

19. A compost stack according to claim 18 in which the tubular duct (14) tapers toward the top of the passage.

## Patentansprüche

1. Verfahren zum Kultivieren von Pilzen, wobei ein Gemisch (12, 35) von organischem und faserhaltigem Material kompostiert und mit Pilzbrut bepflanzt wird, und wobei ein offenendiger rohrförmiger Belüftungsdurchgang (14, 23) durch einen Stapel (10, 11, 20) des Kompostes ausgebildet wird, der Stapel (10, 11, 20) oberhalb des Erdbodens gehalten wird, wobei der offenendige rohrförmige Belüftungsdurchgang (14, 23) mit einem Raum unterhalb des Stapels in Verbindung steht, dadurch gekennzeichnet, daß, wenn die Temperatur innerhalb des Stapels (10, 11, 20) ansteigt, Kühlluft aus der Atmosphäre unterhalb des Stapels durch Konvektion in den rohrförmigen Belüftungsdurchgang (14, 23) eingezogen wird und durch den Durchgang nach oben strömt um den Temperaturanstieg innerhalb des Stapels zu steuern.

2. Verfahren nach Anspruch 1, wobei mehrere Belüftungsdurchgänge (23) ausgebildet werden durch Kompaktieren des Kompostes (35) um eine Anordnung rohrförmiger Schablonen (31) und danach Entfernen der Schablonen.

3. Verfahren nach Anspruch 1 oder Anspruch 2, wobei eine obere Abdeckschicht (18, 24) auf den Stapel (10, 11, 20) aufgebracht wird und der rohrförmige Belüftungsdurchgang (14, 23) durch die Schicht hindurchreicht.

4. Verfahren nach Anspruch 1 oder Anspruch 2, wobei eine obere Abdeckschicht (18, 24) auf den Stapel (10, 11, 20) aufgebracht wird und Luft vom oberen Ende des Belüftungsdurchgangs (14, 23) durch einen in oder gerade unterhalb der Abdeckschicht ausgebildeten Seitenkanal (25, 42) in die Atmosphäre ausströmt.

5. Verfahren nach einem der vorhergehenden Ansprüche, wobei der rohrförmige Belüftungsdurchgang (14, 23) während der Vorbereitung des Kompostes und vor der Bepflanzung mit Pilzbrut ausgebildet wird.

6. Verfahren nach einem der Ansprüche 1-4, wobei der rohrförmige Belüftungsdurchgang (14, 23) während oder nach der Bepflanzung mit Pilzbrut ausgebildet wird.

7. Verfahren nach Anspruch 2, wobei der belüftete Stapel (20) gebildet wird durch Einführen rohrförmiger Schablonen (31) durch entsprechende Öffnungen (33) in ein Basis-Halteelement (32) zum Halten des Stapels oberhalb des Erdbodens, vorübergehendes Einschließen der Schablonen in einem Gehäuse (34), Füllen des Gehäuses (34) mit Kompost oder mit einem Gemisch aus Kompost und Brut, Kompaktieren der Füllung und danach Entfernen des Gehäuses (34) und Entfernen der Schablonen (31) aus der kompaktierten Füllung.

8. Verfahren nach Anspruch 3 oder Anspruch 4, weiterhin umfassend das Umhüllen der Seitenwände des Stapels in eine flexible Umhüllung, wobei die Umhüllung über die obere Oberfläche des Stapels hinausreicht, um flexible Seitenwände bereitzustellen zur Aufnahme der Abdeckschicht (18, 24).

9. Verfahren nach einem der vorhergehenden Ansprüche, wobei die Temperatur inerhalb des Kompostgemisches weiterhin durch selektives Hemmen des Luftstroms durch den Belüftungsdurchgang (14, 23) gesteuert wird.

10. Kompoststapel zum Kultivieren von Pilzen, wobei der Stapel (10, 11, 20) ein kompostiertes Gemisch von mit Pilzbrut bepflanztem organischem und faserhaltigem Material umfaßt und einen offenendigen rohrförmigen Belüftungsdurchgang (14, 23) beinhaltet, der Stapel (10, 11, 20) von einem Basiselement (32) oberhalb des Erdbodens gehalten wird und der rohrförmige Belüftungsdurchgang (14, 23) mit einer Öffnung (33) im Basiselement (32) in Linie ausgerichtet ist, dadurch gekennzeichnet, daß der Raum unterhalb des Basiselements (32) zur Atmosphäre offen ist, wobei, wenn die Temperatur innerhalb des Komposts ansteigt, Kühlluft aus der Atmosphäre unterhalb des Stapels durch Konvektion in den Durchgang eingezogen wird und durch den Durchgang nach oben strömt um den Temperaturanstieg innerhalb des Komposts zu steuern.

11. Kompoststapel nach Anspruch 10, wobei eine obere Abdeckschicht (18, 24) auf dem kompostierten Gemisch aufgebracht ist und wobei der Belüftungsdurchgang (14, 23) nach oben durch die Abdeckschicht hindurchreicht.

12. Kompoststapel nach Anspruch 10, wobei eine obere Abdeckschicht (18, 24) auf dem kompostierten Gemisch aufgebracht ist und wobei das obere Ende des Belüftungsdurchgangs (23) durch einen in oder gerade unterhalb der Abdeckschicht ausgebildeten Seitenkanal (25, 42) mit der Atmosphäre in Verbindung steht.

13. Kompoststapel nach Anspruch 10, weiterhin umfassend eine Anordnung der Belüftungsdurchgänge (20), wobei jeder Durchgang mit einer entsprechenden Öffnung (33) im Basiselement (32) in Linie ausgerichtet ist.

14. Kompoststapel nach Anspruch 13, wobei das Basis-Halteelement (32) im wesentlichen flach ist und jede Öffnung (33) über die Oberfläche des Halteelements herausragt.

15. Kompoststapel nach Anspruch 14, wobei die Größe der Öffnung (33) in Aufwärtsrichtung fortschreitend abnimmt.

16. Kompoststapel nach Anspruch 12, wobei der Seitenkanal durch ein wasserundurchlässiges Materialstück (25) gebildet ist, und wobei oberhalb des Kanals ein entsprechendes Stück eines wasserabsorbierenden Materials (46) zur Bewässerung der Abdeckschicht durch Kapillarwirkung verläuft.

17. Kompoststapel nach Anspruch 10, wobei das Basiselement (32) das Unterteil eines das Kompostgemisch enthaltenden Behälters (10, 11) umfaßt.

18. Kompoststapel nach Anspruch 17, wobei der Belüftungsdurchgang (14) durch einen hohlen rohrförmigen Kanal gebildet ist.

19. Kompoststapel nach Anspruch 18, wobei der rohrförmige Kanal (14) sich zur Oberseite des Durchgangs hin verjüngt.

## Revendications

1. Procédé pour cultiver des champignons selon lequel un mélange (12, 35) de matière organique et fibreuse est mis en compost et implanté de blanc de champignon et selon lequel un passage tubulaire de ventilation à extrémités ouvertes (14, 23) est formé au-travers d'une pile (10, 11, 12) du compost, la pile (10, 11, 12) étant supportée au-dessus du niveau du sol, le passage tubulaire de ventilation à extrémités ouvertes (14, 23) communiquant avec un espace en-dessous de la pile, caractérisé en ce que, lorsque la température dans la pile (10, 11, 20) augmente, de l'air de refroidissement est extrait de l'atmosphère par convexion dans ledit passage tubulaire de ventilation (14, 23) du dessous de la pile et il circule vers le haut au-travers du passage pour contrôler l'élévation de température dans la pile.

2. Procédé selon la revendication 1 dans lequel une pluralité de passages de ventilation (23) sont formés par compactage du compost (35) autour d'un réseau de gabarits tubulaires (31) et ensuite en enlevant les gabarits.

3. Procédé selon la revendication 1 ou 2 dans lequel une couche supérieure de garnissage (18, 24) est ajoutée à la pile (10, 11, 20) et le passage de ventilation tubulaire (14, 23) s'étend au-travers de ladite couche.

4. Procédé selon la revendication 1 ou 2 dans lequel une couche supérieure de garnissage (18, 24) est ajoutée à la pile (10, 11, 20) et de l'air provenant de l'extrémité supérieure du passage de ventilation (14, 23) s'écoule vers l' extérieur, vers l'atmosphère, au-travers d'un canal latéral (25, 42) formé dans la couche de garnissage, ou juste en-dessous.

5. Procédé selon l'une quelconque des revendications précédentes dans lequel le passage tubulaire de ventilation (14, 23) est formé pendant la préparation du compost et avant l'implantation du blanc de champignon.

6. Procédé selon l'une quelconque des revendications 1-4 dans lequel le passage tubulaire de ventilation (14, 23) est formé pendant ou après l'implantation du blanc de champignon.

7. Procédé selon la revendication 2 dans lequel la pile ventilée (20) est réalisée en introduisant les gabarits tubulaires (31) au-travers des ouvertures respectives (33) d'un élément support de base (32) pour supporter la pile au-dessus du niveau du sol, en enfermant les gabarits dans une enceinte provisoire (34), en remplissant l'enceinte (34) de compost ou d'un mélange de compost et de blanc de champignon, en compactant le remplissage et ensuite en enlevant l'enceinte (34) et le gabarit (31) du remplissage compacté.

8. Procédé selon la revendication 3 ou 4 comportant un enveloppement des parois latérales de la pile dans une enveloppe souple, l'enveloppe s'étendant au-dessus de la surface supérieure de la pile afin de réaliser des parois latérales souples pour retenir la couche de garnissage (18, 24).

9. Procédé selon l'une quelconque des revendications précédentes dans lequel la température du mélange de compost est encore contrôlée en bloquant sélectivement le flux d'air au-travers du passage de ventilation (14, 23).

10. Pile de compost pour la culture de champignons, la pile (10, 11, 20) comportant un mélange composté de matière organique et fibreuse implanté de blanc de champignon et comprenant un passage de ventilation tubulaire à extrémités ouvertes (14, 23), la pile (10, 11, 20) étant supportée par un élément de base (32) au-dessus du niveau du sol, et le passage de ventilation tubulaire (14, 23) étant aligné avec une ouverture (33) de l'élément de base (32), caractérisée en ce que l'espace situé en-dessous de l'élément de base (32) est ouvert à l'atmosphère de telle manière que, lorsque la température dans le compost augmente, de l'air de refroidissement est extrait par convexion de l'atmosphère, dans ledit passage du dessous de la pile et s'écoule vers le haut au-travers du passage pour contrôler l'élévation de la température dans le compost.

11. Pile de compost selon la revendication 10 dans laquelle une couche supérieure de garnissage (18, 24) est ajoutée au mélange composté et dans laquelle le passage de ventilation (14, 23) s'étend vers le haut au-travers de la couche de garnissage.

12. Pile de compost selon la revendication 10 dans laquelle une couche supérieure de garnissage (18, 24) est ajoutée au mélange composté et dans laquelle l'extrémité supérieure du passage de ventilation (23) communique avec l'atmosphère par l'intermédiaire d'un canal latéral (25, 42) formé dans la couche de garnissage ou juste au-dessous.

13. Pile de compost selon la revendication 10 comprenant en outre un réseau desdits passages de ventilation (20), chaque passage étant aligné avec une ouverture respective (33) dans l'élément de ballast (32).

14. Pile de compost selon la revendication 13 dans laquelle l'élément de support de base (32) est généralement plat et chaque ouverture (33) fait saillie au-dessus de la surface de l'élément support.

15. Pile de compost selon la revendication 14 dans laquelle la dimension de l'ouverture (33) décroît progressivement dans une direction orientée vers le haut.

16. Pile de compost selon la revendication 12 dans laquelle le canal latéral est formé par une longueur d'un matériau (25) imperméable à l'eau et dans laquelle une longueur correspondante d'un matériau absorbant l'eau (46) s'étend au-dessus dudit canal pour mouiller la couche de garnissage par action capillaire.

17. Pile de compost selon la revendication 10 dans laquelle l'élément de base (32) comprend la base d'un conteneur (10, 11) renfermant le mélange de compost.

18. Pile de compost selon la revendication 17 dans laquelle le passage de ventilation (14) est formé par une conduite tubulaire creuse.

19. Pile de compost selon la revendication 28 dans laquelle la conduite tubulaire (14) est chanfreinée vers le haut du passage
